# EUROPEAN PATENT APPLICATION

(11) **EP 2 808 307 A2**
(43) Date of publication of application: **03.12.2014**
(21) Application number: 14181295.8
(22) Date of filing: 05.10.2004
(51) Int. Cl.: C02F 11/00, C10J 3/00, F02M 21/02, F02B 43/08, F02C 3/28, F02C 6/18, F23G 5/027, F23G 5/04, F23G 5/46, F23G 5/30, F23J 15/06, C10J 3/48, F02D 19/04

(54) **Method and apparatus for treating organic matter**

(30) Priority: 06.10.2003 JP 2003347656; 26.01.2004 JP 2004017704
(62) Divisional of application: 04773721.8
(71) Applicant: Ebara Corporation, Tokyo 144-8510 (JP)
(72) Inventor: Miyoshi, Norihisa, Tokyo, 144-8510 (JP); Imaizumi, Takashi, Tokyo, 144-8510 (JP); Sawai, Kenji, Tokyo, 144-8510 (JP); Iriyama, Morio, Tokyo, 144-8510 (JP); Takakura, Shutaro, Tokyo, 144-8510 (JP)
(74) Representative: Wimmer, Hubert

(57) **Abstract**

An organic matter such as sewage sludge is treated by gasifying the organic matter into a combustible gas and using the combustible gas as a fuel for a gas engine or a gas turbine to recover power (energy). In a method of treating the organic matter, an organic matter (120) as a raw material is dried in a drying process (51), the dried raw material is gasified to produce a generated gas (123), and the sensible heat from the generated gas and/or a combustion gas produced by gasification is recovered by using a heating medium in a recovery process. Then, the heating medium heated in the recovery process is introduced into the drying process as a heating medium gas for drying.

## Description

### Technical field

The present invention relates to a method and apparatus for treating an organic matter such as sewage sludge by gasifying the organic matter into a combustible gas and using the combustible gas as a fuel for a gas engine or a gas turbine to recover power (energy) in the form of electricity or the like.

### Background art

Presently, available processes of treating an organic matter having a high water content such as sewage sludge (organic matter having a water content of 70 % or higher) are roughly classified into an anaerobic digestion process and an incineration process. The anaerobic digestion process is capable of recovering energy because it generates a methane gas due to methane fermentation, but is disadvantageous in that the process suffers an increased facility cost owing to the need of a large digestion tank on account of a slow reaction speed, the process takes time to recover once its reaction state is disturbed because the process is a biological reaction, and the process requires an incineration facility for treating a digestion sludge that is finally produced.

The incineration process has a quick reaction time and needs a small incineration furnace, but is disadvantageous in that since a dehydrated sludge having a high water content is not combusted by its own calorific value, the dehydrated sludge needs to be dried to lower its water content, and hence the process requires a large drying apparatus and a large heat exchanger, resulting in an energy consumption facility due to the need for supplying the energy of heavy oil or the like as a heat source for drying the sludge.

### Disclosure of the invention

Sewage sludge treatment service is currently carried out by local governments funded by the tax. The operation of the service will come under pressure in the future to substantially lower its initial cost and running cost by introducing PFI (Private Financial Initiatives).

It is an object of the present invention to solve the problems of the treatment of an organic matter such as sewage sludge, and to provide a method and apparatus for treating an organic matter at a greatly reduced initial cost and running cost.

According to a first aspect of the present invention, there is provided a method of treating an organic matter, comprising the steps of: drying an organic matter as a raw material; gasifying the dried raw material to produce a generated gas; and recovering sensible heat from the generated gas and/or a combustion gas produced by the gasifying step; wherein air, nitrogen gas, carbon dioxide gas, or a mixture of at least two of air, nitrogen gas and carbon dioxide gas is used as a heating medium used in the recovering step, and the heating medium heated in the recovering step is introduced into the drying step for use as a heating medium gas for drying.

According to the first aspect of the present invention, since the sensible heat is recovered from the combustible gas (generated gas) and/or the combustion gas produced in the gasifying step in the recovering step, and the heated heating medium gas is introduced into the drying step for use as a heating medium gas for drying, the water content of the organic matter is lowered, and the consumption of heat due to water evaporation in the gasifying step is reduced for an increased cold gas efficiency.

In a preferred aspect of the present invention, in the drying step, a raw material drying apparatus for bringing the heating medium gas into direct contact with the raw material is used, and the heating medium gas whose humidity has been increased by evaporated water is cooled by treated sewage discharged from a sewage treatment facility to condense water content in the heating medium gas and lower the humidity of the heating medium gas, and the heating medium gas whose humidity has been lowered is reused as the heating medium gas for drying.

According to the present invention, the heating medium gas for drying whose humidity has been increased by evaporated water in the drying step is cooled by the treated sewage discharged from the sewage treatment facility to condense the water content in the heating medium gas, whereby the humidity of the heating medium gas is lowered and the heating medium gas is reused as a heating medium gas for drying. Thus, the organic matter can efficiently be dried, and the heat of the heating medium gas for drying can maximally be used to dry the organic matter having a high water content.

In a preferred aspect of the present invention, when the heating medium gas for drying is cooled by the treated sewage, the heating medium gas and the treated sewage are brought into direct contact with each other to cool the heating medium gas and wash away a solid material contained in the heating medium gas with the treated sewage.

With the above arrangement, because the heating medium gas and the treated sewage are brought into direct contact with each other, not only the heating medium gas is efficiently cooled to condense away the water content, but also dust particles contained in the heating medium gas can be washed away with the treated sewage. In the case where the present invention is applied to the treatment of a sewage sludge in a sewage treatment facility, if a water scrubber is used as a condensing means for bringing the heating medium gas for drying and the treated sewage into direct contact with each other, then a large amount of water is required to condense the water content. However, because a large amount of treated sewage exists in the sewage treatment facility, only part of the treated water may be used to condense away the water content. The water used to condense away the water content may be treated by a water treatment equipment in the sewage treatment facility, without the need for a new equipment.

In a preferred aspect of the present invention, the generated gas produced by the gasifying step is introduced into a gas engine or a gas turbine to recover power therefrom.

Because the generated gas produced in the gasifying step is introduced into the gas engine or the gas turbine to recover power therefrom, the organic matter having a high water content can be treated with a small facility scale at a low initial cost and a low running cost.

In a preferred aspect of the present invention, thermal energy is recovered from an exhaust gas discharged from the gas engine or the gas turbine using the heating medium gas comprising air, nitrogen gas, carbon dioxide gas, or a mixture of at least two of air, nitrogen gas and carbon dioxide gas, and the heating medium gas which has been heated is introduced into the drying step for use as the heating medium gas for drying.

Since the thermal energy is recovered from the exhaust gas discharged from the gas engine or the gas turbine using the heating medium gas, and the heating medium gas which has been heated by the recovered thermal energy is introduced into the raw material drying step, the heat of the exhaust gas from the gas engine or the gas turbine can be used to dry the organic matter having a high water content, and hence the consumption of heat due to water evaporation in the gasifying step is reduced for an increased gasification efficiency.

If the organic matter such as sewage sludge or the like has a very high water content, and cannot sufficiently be dried by the heat recovered from the gasifying step or the power recovery step including the gas engine or the gas turbine, then the cold gas efficiency in the gasifying step may be lowered, a sufficient amount of generated gas may not be available, and the output from the power recovery step may be reduced. In such a case, the facility operation rate of the power recovery process is lowered, resulting in an economically undesirable situation.

In a preferred aspect of the present invention, a fuel comprising natural gas, town gas, propane gas, gasoline, kerosine, gas oil, or a heavy oil is supplied as an auxiliary fuel or a main fuel to the gas engine or the gas turbine.

With this arrangement, the facility operation rate of the power recovery step is prevented from being lowered. As the amount of heat discharged from the power recovery step increases, the heat may be used as a heat source for heating the heating medium gas for drying to maintain the dried level of the organic matter even if the organic matter is a sludge having a very high water content. The cold gas efficiency in the gasifying step is increased to increase the amount of energy recovered from the organic matter having a high water content.

In a preferred aspect of the present invention, the amount of fuel supplied to the gas engine or the gas turbine is adjusted so that the sum of the amount of thermal energy recovered from the generated gas and/or the combustion gas that is produced in the gasifying step and the amount of thermal energy recovered from an exhaust gas discharged from the gas engine or the gas turbine is equal to or higher than the amount of thermal energy that is required in the drying step.

Since the amount of fuel supplied to the gas engine or the gas turbine is adjusted in order to keep the sum of the amount of thermal energy recovered from the generated gas and/or the combustion gas that is produced in the gasifying step and the amount of thermal energy recovered from the exhaust gas from the gas engine or the gas turbine, equal to or higher than the amount of thermal energy that is required in the raw material drying step, the rate of energy recovery from the organic matter having a high water content is increased, and suffers less season-dependent variations.

According to a second aspect of the present invention, there is also provided a method of treating an organic matter, comprising the steps of: supplying an organic matter to a gasification chamber; gasifying the organic matter to produce a combustible gas and residue in the gasification chamber; combusting the residue produced in the gasification chamber in a combustion chamber to produce a combustion gas; and introducing the combustible gas produced in the gasification chamber into a gas engine or a gas turbine to recover power; wherein the gasification chamber and the combustion chamber are provided in an internally circulating fluidized-bed gasification furnace, and a bed material is circulated between the gasification chamber and the combustion chamber.

According to the second aspect of the present invention, because the organic matter having a high water content is gasified in the gasification chamber of the internally circulating fluidized-bed gasification furnace to produce the combustible gas, and the combustible gas is introduced into the gas engine or the gas turbine to recover power therefrom, the organic matter having a high water content such as sewage sludge can be treated with a small facility scale at a low initial cost and a low running cost.

In a preferred aspect of the present invention, a heat exchange between the combustible gas produced in the gasification chamber, the combustion gas produced in the combustion chamber and an exhaust gas from the gas engine or the gas. turbine, and air is carried out to recover sensible heat from these gases, and the air heated by the heat recovery is used as drying air for drying the organic matter.

Since sensible heat is recovered from the generated gas (combustible gas) and the combustion gas from the internally circulating fluidized-bed gasification furnace and the exhaust gas from the gas engine or the gas turbine, and heated air is used as the drying air for drying the organic matter, the water content of the organic matter is lowered, and the consumption of heat due to water evaporation in the internally circulating fluidized-bed gasification furnace is reduced for an increased gasification efficiency. In addition, an auxiliary fuel is not required for drying the organic matter.

In a preferred aspect of the present invention, the drying air used for drying the organic matter is heated by a heat exchange between the drying air, and the combustible gas, the combustion gas and the exhaust gas, and is circulated again for use as the drying air, and part of the drying air which is circulated is introduced into the internally circulating fluidized-bed gasification furnace and is deodorized therein.

The drying air that has been used to dry the organic matter is heated by a heat exchange between the drying air, and the generated gas, the combustion gas and the exhaust gas, and is circulated for use as the drying air again. Thus, the heat of the drying air can maximally be used to dry the organic matter having a high water content. When a sewage sludge is dried using drying air, a large amount of malodorous air is produced, and needs to be deodorized. According to the present invention, since the malodorous drying air is circulated, without being discharged out, to dry the organic matter, and .part of the malodorous drying air is introduced as a gas for combustion into the combustion chamber to combust the malodorous component at a high temperature. Therefore, the malodorous drying air is not discharged out, and no deodorizing facility is required. Since no deodorizing facility is required, the initial cost and the running cost are reduced.

In a preferred aspect of the present invention, a water content in the drying air used for drying the organic matter is condensed away to lower the rate of the water content in the drying air.

Inasmuch as the water content in the drying air used for drying the organic matter having a high water content is condensed away to lower the rate of the water content in the drying air, and the drying air is used again to dry the organic matter, the organic matter can efficiently be dried.

In the case where the present invention is applied to the treatment of a sewage sludge in a sewage treatment facility, if a water scrubber is used as a condensing means, then a large amount of water is required to condense the water content. However, because a large amount of treated sewage exists in the sewage treatment facility, only part of the treated water may be used to condense away the water content. The water used to condense away the water content may be treated by a water treatment equipment in the sewage treatment facility, without the need for a new equipment.

In a preferred aspect of the present invention, the water content in the drying air is condensed away by a direct heat exchange between the drying air and cooling water.

In a preferred aspect of the present invention, a sewage drain is used as cooling water to condense away the water content in the drying air.

In a preferred aspect of the present invention, a scrubber is provided for cleaning the combustible gas supplied from the gasification chamber, and a temperature-lowering and dust-removing apparatus is provided upstream of the scrubber, whereby the combustible gas is treated by the temperature- lowering and dust-removing apparatus to lower a temperature of the combustible gas to a value ranging from 150°C to 250°C for condensing tar in the combustible gas and to remove dust from the combustible gas, and then the combustible gas is charged into the scrubber.

In a preferred aspect of the present invention, a fuel comprising natural gas, town gas, propane gas, gasoline, kerosine, gas oil, or a heavy oil is supplied as an auxiliary fuel or a main fuel to the gas engine or the gas turbine.

According to the present invention, if the cold gas efficiency in the gasifying step is lowered and a sufficient amount of generated gas (combustible gas) is not available, then a fuel such as natural gas, town gas, propane gas, gasoline, kerosine, gas oil, or A heavy oil is supplied as an auxiliary fuel or a main fuel to the gas engine or the gas turbine. With this arrangement, the facility operation rate of the power recovery step is prevented from being lowered. The dried level of the organic matter is maintained even if the organic matter is a sludge having a very high water content. The cold gas efficiency in the gasifying step is increased to increase the amount of energy recovered from the organic matter having a high water content.

In a preferred aspect of the present invention, the amount of fuel supplied to the gas engine or the gas turbine is adjusted so that the sum of the amount of thermal energy recovered from the combustible gas and/or the combustion gas that is produced from the internally circulating fluidized-bed gasification furnace and the amount of thermal energy recovered from an exhaust gas discharged from the gas engine or the gas turbine is equal to or higher than the amount of thermal energy' that is required to dry the organic matter.

Since the amount of fuel supplied to the gas engine or the gas turbine is adjusted in order to keep the sum of the amount of thermal energy recovered from the generated gas and/or the combustion gas that is produced in the internally circulating fluidized-bed gasification furnace and the amount of thermal energy recovered from the exhaust gas from the gas engine or the gas turbine, equal to or higher than the amount of thermal energy that is required in the raw material drying step, the rate of energy recovery from the organic matter having a high water content is increased, and suffers less season-dependent variations.

According to a third aspect of the present invention, there is provided an apparatus for treating an organic matter, comprising: a gasification chamber configured to gasify an organic matter to produce a combustible gas and residue; a combustion chamber configured to combust the residue produced in the gasification chamber to produce a combustion gas; and a supply device configured to supply the combustible gas produced in the gasification chamber into a gas engine or a gas turbine to recover power; wherein the gasification chamber and the combustion chamber are provided in an internally circulating fluidized-bed gasification furnace, and a bed material is circulated between the gasification chamber and the combustion chamber.

Because the organic matter having a high water content is gasified in the gasification chamber of the internally circulating fluidized-bed gasification furnace to produce the combustible gas (generated gas), and the combustible gas is introduced into the gas engine or the gas turbine to recover power therefrom, the organic matter having a high water content such as a sewage sludge can be treated with a small facility scale at a low initial cost and a low running cost.

In a preferred aspect of the present invention, the apparatus further comprises: a drying apparatus for drying the organic matter; and an air preheater for performing a heat exchange between the combustible gas produced in the gasification chamber, the combustion gas generated in the combustion chamber and an exhaust gas from the gas' engine or the gas turbine, and air to recover sensible heat from the gases; wherein the air heated by heat recovery in the air preheater is introduced as drying air into the drying apparatus.

Since sensible heat is recovered by the air preheater from the generated gas (combustible gas) and the combustion gas from the internally circulating fluidized-bed gasification furnace and the exhaust gas from the gas engine or the gas turbine, and heated air used as the drying air for drying the organic matter having a high water content is introduced into the drying apparatus, the water content of the organic matter is lowered, and the consumption of heat due to water evaporation in the internally circulating fluidized-bed gasification furnace is reduced for an increased gasification efficiency. In addition, an auxiliary fuel is not required for drying the organic matter.

In a preferred aspect of the present invention, the apparatus further comprises a drying air circulation passage for leading the drying air discharged from the drying apparatus and heated by the air preheater to the drying apparatus again; wherein part of the drying air which circulates through the drying air circulation passage is introduced as a gas for combustion into the combustion chamber and is deodorized therein.

Since the discharged drying air used for drying the organic matter having a high water content is heated by a heat exchange between the drying air, and the generated gas, the combustion gas and the exhaust gas, and is introduced through the drying air circulation passage into the drying apparatus for use as the drying air, the heat of the drying air can maximally be used to dry the organic matter having a high water content. When a sewage sludge is dried using drying air, a large amount of malodorous air is produced, and needs to be deodorized. According to the present invention, the malodorous drying air is confined in the drying air circulation passage and used to dry the organic matter, and part of the malodorous drying air is introduced into the combustion chamber to combust the malodorous component at a high temperature. Therefore, the malodorous drying air is not discharged out, and no deodorizing facility is required. Since no deodorizing facility is required, the initial cost and the running cost are reduced.

In a preferred aspect of the present invention, the apparatus further comprises a condenser for condensing away a water content in the drying air to lower the rate of the water content in the drying air; wherein the drying air discharged from the drying apparatus is introduced into the condenser.

The drying air having a large water content, discharged from the drying apparatus, is introduced into the condenser, and the water content in the drying air is condensed away to lower the rate of the water content in the drying air. The drying air is then supplied to the drying apparatus. Therefore, the organic matter can efficiently be dried. In the case where the present invention is applied to the treatment of a sewage sludge in a sewage treatment facility, if a water scrubber is used as a condensing means, then a large amount of water is required to condense the water content. However, because a large amount of treated sewage exists in the sewage treatment facility, only part of the treated water may be used to condense away the water content. The water used to condense away the water content may be treated by a water treatment equipment in the sewage treatment facility, without the need for a new equipment.

In a preferred aspect of the present invention, a fuel comprising natural gas, town gas, propane gas, gasoline, kerosine, gas oil, or A heavy oil is supplied as an auxiliary fuel or a main fuel to the gas engine or the gas turbine.

According to the present invention, if the cold gas efficiency in the gasification chamber of the internally circulating fluidized-bed gasification furnace is lowered and a sufficient amount of generated gas is not available, then a fuel such as natural gas, town gas, propane gas, gasoline, kerosine, gas oil, or A heavy oil is supplied as an auxiliary fuel or a main fuel to the gas engine or the gas turbine. Thus, the facility operation rate of the power recovery process is prevented from being lowered. The dried level of the organic matter is maintained even if the organic matter is a sludge having a very high water content. The cold gas efficiency in the gasifying step is increased to increase the amount of energy recovered from the organic matter having a high water content.

In a preferred aspect of the present invention, the amount of fuel supplied to the gas engine or the gas turbine is adjusted so that the sum of the amount of thermal energy recovered from the combustible gas and/or the combustion gas that is produced from the internally circulating fluidized-bed gasification furnace and the amount of thermal energy recovered from an exhaust gas discharged from the gas engine or the gas turbine is equal to or higher than the amount of thermal energy that is required to dry the organic matter.

Since the amount of fuel supplied to the gas engine or the gas turbine is adjusted in order to keep the sum of the amount of thermal energy recovered from the generated gas and/or the combustion gas that is produced in the internally circulating fluidized-bed gasification furnace and the amount of thermal energy recovered from the exhaust gas from the gas engine or the gas turbine, equal to or higher than the amount of thermal energy that is required in the raw material drying step, the rate of energy recovery from the organic matter having a high water content is increased, and suffers less season-dependent variations.

### Brief description of the drawings

FIG. 1 is a block diagram showing a basic system arrangement of a treating apparatus for performing a method of treating an organic matter having a high water content according to the present invention;
FIG. 2 is a block diagram showing another basic system arrangement of a treating apparatus for performing a method of treating an organic matter having a high water content according to the present invention;
FIGS. 3A and 3B are diagrams showing seasonal changes of generated electric power output and required electric power at the time a sewage sludge is treated by the treating apparatus according to the present invention;
FIG. 4 is a schematic view showing a system arrangement of a treating apparatus for treating an organic matter having a high water content according to the present invention;
FIG. 5 is a diagram showing an example of components of a dehydrated sewage sludge;
FIG. 6 is a diagram showing an example of calculations of a sewage sludge treating process performed by the treating apparatus for treating an organic matter having a high water content according to the present invention;
FIG. 7 is a schematic view showing a system arrangement of a treating apparatus for treating an organic matter having a high water content according to the present invention; and
FIG. 8 is a block diagram showing another basic system arrangement of a treating apparatus for performing a method of treating an organic matter having a high water content according to the present invention.

### Best mode for carrying out the invention

Embodiments of the present invention will be described below with reference to the drawings. In the embodiments, a treating apparatus for treating an organic matter is installed in a sewage treatment facility for treating an organic matter having a high water content such as sewage sludge or the like.

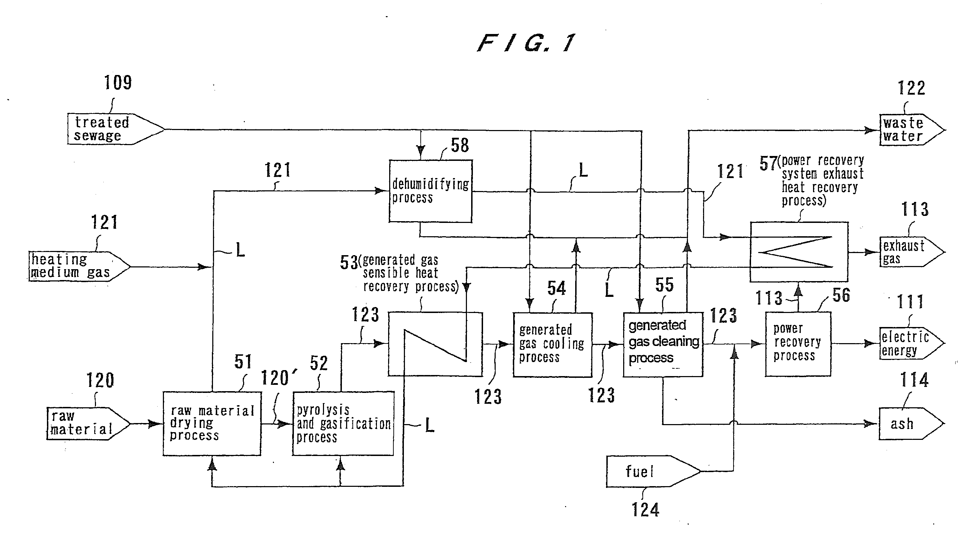

FIG. 1 shows a basic system arrangement of a treating apparatus for performing a method of treating an organic matter having a high water content according to the present invention. As shown in FIG. 1, the treating apparatus has a raw material drying process 51 for drying an organic matter having a high water content such as sewage sludge or the like, a pyrolysis and gasification process 52 for pyrolyzing and gasifying the dried organic matter, a generated gas sensible heat recovery process 53 for recovering the sensible heat from a generated gas that is produced by pyrolysis of the organic matter, a generated gas cooling process 54 for cooling the generated gas, a generated gas cleaning process 55 for cleaning the generated gas, a power recovery process 56, a power recovery system exhaust heat recovery process 57, and a dehumidifying process 58 for removing water from a heating medium gas 121.

In the pyrolysis and gasification process 52, a partial-oxidation-type gasification furnace for gasifying a raw material by partial oxidation is used. The partial-oxidation-type gasification furnace is a furnace of the type for combusting part of the raw material therein and pyrolyzing and gasifying the remaining raw material with the heat generated by combustion of the part of the raw material, thereby producing a mixture of combustion gas component and pyrolysis gas component as a generated gas. Although an internally circulating fluidized-bed gasification furnace is optimum for use as the gasification furnace, if an auxiliary fuel is steadily used, then since variations of the quality of the generated gas are reduced by the auxiliary fuel, the general gasification furnace can be used in the pyrolysis and gasification process 52.

According to the treating apparatus having the above arrangement, in the raw material drying process 51, a raw material 120 comprising an organic matter having a high water content (water content of 70 % or higher) such as sewage sludge is supplied and dried, and the dried raw material 120' is supplied to the pyrolysis and gasification process 52. In the pyrolysis and gasification process 52, part of the raw material 120' is combusted, and the remaining raw material 120' is pyrolyzed and gasified with the heat generated by combustion of the part of the raw material 120', and then a generated gas 123 comprising a mixture of combustion gas component and pyrolysis gas component is supplied to the generated gas sensible heat recovery process 53. The generated gas, from which sensible heat has been recovered in the generated gas sensible heat recovery process 53, is cooled in the generated gas cooling process 54 and cleaned in the generated gas cleaning process 55, and then supplied to the power recovery process 56 where an electric generator (not shown) is operated to recover electric energy 111.

An exhaust gas 113 from the power recovery process 56 is delivered to the power recovery system exhaust heat recovery process 57. The exhaust gas 113, from which heat has been recovered by the power recovery system exhaust heat recovery process 57, is treated by an exhaust gas treating facility or the like (not shown), and then discharged from a stack or the like. The power recovery system exhaust heat recovery process 57 has a heating medium passage L for allowing a heating medium gas 121 comprising air, nitrogen gas, carbon dioxide gas, or a mixture thereof to pass therethrough. The heating medium gas 121 is heated by the heat recovered in the power recovery system exhaust heat recovery process 57, and then delivered to the generated gas sensible heat recovery process 53. The heating medium gas 121 is further heated by the heat recovered from the generated gas 123 in the generated gas sensible heat recovery process 53, and then delivered to the raw material drying process 51 and the pyrolysis and gasification process 52 where the heating medium gas 121 is used to provide heat for drying the raw material 120 and pyrolyzing and gasifying the raw material 120'. The heating medium passage L is supplied with the heating medium gas 121 comprising air, nitrogen gas, carbon dioxide gas, or a mixture thereof when the heating medium gas 121 runs short.

The dehumidifying process 58, the generated gas cooling process 54, and the generated gas cleaning process 55 are supplied with treated sewage 109. The raw material drying process 51 employs a raw material drying apparatus for drying the raw material 120 by bringing the raw material 120 into direct contact with the heated heating medium gas 121. The heating medium gas 121 which has been used for drying in the raw material drying apparatus and has its humidity increased by water evaporated from the raw material 120 is delivered to the dehumidifying process 58. In the dehumidifying process 58, the heating medium gas 121 is cooled by the treated sewage 109 to condense the water in the heating medium gas 121, thus lowering the humidity of the heating medium gas 121. The heating medium gas 121 with the lowered humidity is heated by the heat recovered in the power recovery system exhaust heat recovery process 57 and the generated gas sensible heat recovery process 53, and is used as a heat source again in the raw material drying process 51 and the pyrolysis and gasification process 52. The dehumidifying process 58 has a scrubber or the like for bringing the heating medium gas 121 and the treated sewage 109 into direct contact with each other to wash away dust particles contained in the heating medium gas 121 with the treated sewage 109.

In the generated gas cooling process 54, the generated gas 123 from the generated gas sensible heat recovery process 53 is cooled by the treated sewage 109. The Cooled generated gas 123 is cleaned by the treated sewage 109 in the generated gas cleaning process 55. The generated gas 123 which has been cleaned to remove dust particles therefrom is supplied to a gas engine or a gas turbine in the power recovery process 56. The treated sewage 109 that has been supplied to the dehumidifying process 58, the generated gas cooling process 54, and the generated gas cleaning process 55 is delivered as waste water 122 to a sewage treatment facility.

If the raw material 120 has a very high water content, like an organic matter having a high water content such as sewage sludge, and cannot sufficiently be dried by the heat discharged from the pyrolysis and gasification process 52 and the power recovery process 56 including a gas engine or a gas turbine, then the cold gas efficiency in the pyrolysis and gasification process 52 may be lowered, a sufficient amount of generated gas 123 may not be produced, and the output from the power recovery process 56 may be reduced. In such a case, the facility operation rate of the power recovery process 56 is lowered to cause an economically undesirable situation. In this case, the facility operation rate of the power recovery process 56 can be prevented from dropping by supplying a fuel 124 such as natural gas, town gas, propane gas, gasoline, kerosine, gas oil, or A heavy oil as an auxiliary fuel or a main fuel to the power recovery process 56 including a gas engine or a gas turbine.

With such an arrangement, since the amount of heat discharged from the power recovery process 56 is increased, the heating medium gas 121 is heated by the heat recovered by the power recovery system exhaust heat recovery process 57 and is used as a heat source in the raw material drying process 51 and the pyrolysis and gasification process 52. Consequently, the dried level of the raw material 120 can be maintained even if the raw material 120 is a sludge having a very high water content. The cold gas efficiency in the pyrolysis and gasification process 52 can thus be increased, and the amount of energy recovered from the raw material 120 comprising an organic matter having a high water content can be increased. In this case, the amount of fuel 124 supplied to the power recovery process 56 is adjusted (in this case, the thermal energy supplied to the pyrolysis and gasification process 52 is neglected) so that the sum of the amount of thermal energy recovered from the generated gas 123 produced in the pyrolysis and gasification process 52 and the amount of thermal energy recovered from the exhaust gas from the power recovery process 56 including a gas engine or a gas turbine is equal to or higher than the amount of thermal energy required in the raw material drying process 51, thereby increasing the energy recovery rate of the raw material 120 comprising an organic matter having a high water content and reducing seasonal variations of the energy recovery rate of the raw material 120.

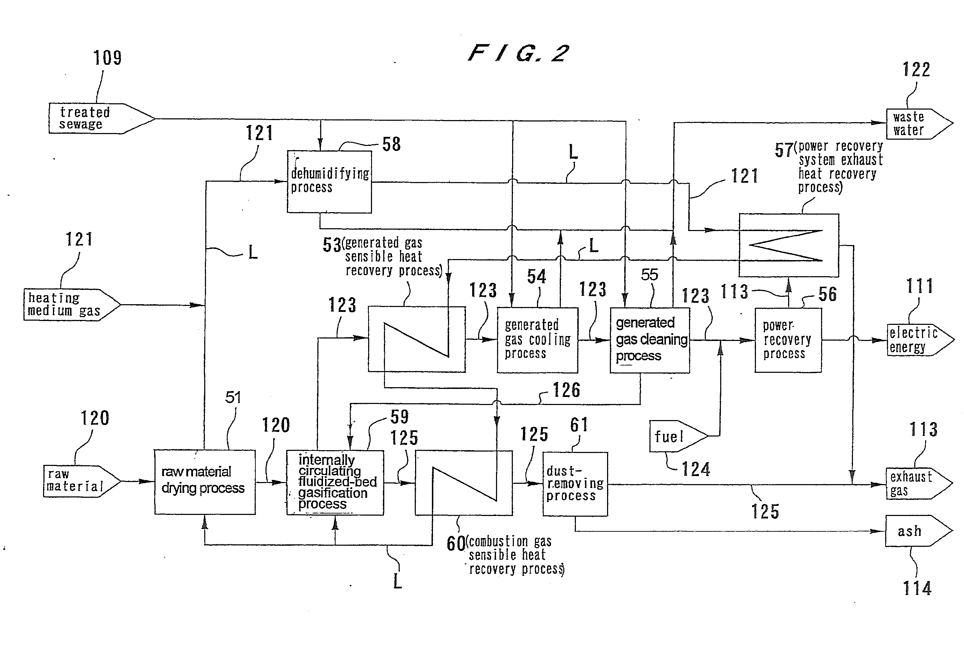

FIG. 2 shows another basic system arrangement of a treating apparatus for performing a method of treating an organic matter having a high water content according to the present invention. As shown in FIG. 2, the treating apparatus includes an internally circulating fluidized-bed gasification process 59 in place of the pyrolysis and gasification process 52 shown in FIG. 1. In the internally circulating fluidized-bed gasification process 59, there is provided an internally circulating fluidized-bed gasification furnace in which a gasification chamber and a combustion chamber are provided in a single furnace and a bed material is circulated between the two chambers. The generated gas 123 from the internally circulating fluidized-bed gasification process 59 is delivered to the generated gas sensible heat recovery process 53 where heat is recovered from the generated gas 123, and is then cooled by the generated gas cooling process 54. The cooled generated gas 123 is cleaned by the generated gas cleaning process 55, and supplied to the power recovery process 56. A combustion gas 125 from the internally circulating fluidized-bed gasification process 59 is delivered to a combustion gas sensible heat recovery process 60 where heat is recovered from the combustion gas 125, and then delivered to a dust-removing process 61 where dust is removed from the combustion gas 125. Then, the combustion gas 125 is discharged to the outside of the system as an exhaust gas 113.

The heating medium gas 121 which has contributed to the drying of the raw material 120 in the raw material drying process 52 and has its increased humidity is delivered to the dehumidifying process 58 where water in the heating medium gas 121 is condensed and removed. The heating medium gas 121 with the lowered humidity is heated by the heat recovered in the power recovery system exhaust heat recovery process 57 and the generated gas sensible heat recovery process 53, and further heated in the combustion gas sensible heat recovery process 60. Thereafter, the heating medium gas 121 is delivered to the raw material drying process 52 and the internally circulating fluidized-bed gasification process 59. The generated gas is cleaned in the generated gas cleaning process 55, and the removed dust is returned to the combustion chamber of the internally circulating fluidized-bed gasification furnace in the internally circulating fluidized-bed gasification process 59 where the dust is combusted.

According to the treating apparatus having the above arrangement, in the raw material drying process 51, a raw material 120 comprising an organic matter having a high water content (water content of 70 % or higher) such as sewage sludge is supplied and dried, and the dried raw material 120' is supplied to the internally circulating fluidized-bed gasification process 59. In the internally circulating fluidized-bed gasification process 59, the raw material 120' is pyrolyzed and gasified in the gasification chamber with the heat generated by combustion of a char (pyrolysis residue) in the combustion chamber, and then a generated gas 123 is supplied to the generated gas sensible heat recovery process 53. The generated gas, from which sensible heat has been recovered in the generated gas sensible heat recovery process 53, is cooled in the generated gas cooling process 54 and cleaned in the generated gas cleaning process 55, and then supplied to the power recovery process 56 where an electric generator (not shown) is operated to recover electric energy 111.

An exhaust gas 113 from the power recovery process 56 is delivered to the power recovery system exhaust heat recovery process 57. The exhaust gas 113, from which heat has been recovered by the power recovery system exhaust heat recovery process 57, is treated.by an exhaust gas treating facility or the like (not shown), and then discharged from a stack or the like. The power recovery system exhaust heat recovery process 57 has a heating medium passage L for allowing a heating medium gas 121 comprising air, nitrogen gas, carbon dioxide gas, or a mixture thereof to pass therethrough. The heating medium gas 121 is heated by the heat recovered in the power recovery system exhaust heat recovery process 57, and then delivered to the generated gas sensible heat recovery process 53. The heating medium gas 121 is further heated by the heat recovered from the generated gas 123 in the generated gas sensible heat recovery process 53, and then delivered to the combustion gas sensible heat recovery process to heat by the combustion gas 125. The heated heating medium gas 121 discharged from the combustion gas sensible heat recovery process is introduced into the raw material drying process 51 and the internally circulating fluidized-bed gasification process 59 where the heating medium gas 121 is used to provide heat for drying the raw material 120 and pyrolyzing and gasifying the raw material 120'. The heating medium passage L is supplied with the heating medium gas 121 comprising air, nitrogen gas, carbon dioxide gas, or a mixture thereof when the heating medium gas 121 runs short.

The dehumidifying process 58, the generated gas cooling process 54, and the generated gas cleaning process 55 are supplied with treated sewage 109. The raw material drying process 51 employs a raw material drying apparatus for drying the raw material 120 by bringing the raw material 120 into direct contact with the heated heating medium gas 121. The heating medium gas 121 which has been used for drying in the raw material drying apparatus and has its humidity increased by water evaporated from the raw material 120 is delivered to the dehumidifying process 58. In the dehumidifying process 58, the heating medium gas 121 is cooled by the treated sewage 109 to condense the water in the heating medium gas 121, thus lowering the humidity of the heating medium gas 121. The heating medium gas 121 with the lowered humidity is heated by the heat recovered in the power recovery system exhaust heat recovery process 57 and the generated gas sensible heat recovery process 53, and is used as a heat source again in the raw material drying process 51 and the pyrolysis and gasification process 52. The dehumidifying process 58 has a scrubber or the like for bringing the heating medium gas 121 and the treated sewage 109 into direct contact with each other to wash away dust particles contained in the heating medium gas 121 with the treated sewage 109.

In the generated gas cooling process 54, the generated gas 123 from the generated gas sensible heat recovery process 53 is cooled by the treated sewage 109. The cooled generated gas 123 is cleaned by the treated sewage 109 in the generated gas cleaning process 55. The generated gas 123 which has been cleaned to remove dust particles therefrom is supplied to a gas engine or a gas turbine in the power recovery process 56. The treated sewage 109 that has been supplied to the dehumidifying process 58, the generated gas cooling process 54, and the generated gas cleaning process 55 is delivered as waste water 122 to a sewage treatment facility.

If the raw material 120 has a very high water content, like an organic matter having a high water content such as sewage sludge, and cannot sufficiently be dried by the heat discharged from the pyrolysis and gasification process 52 and the power recovery process 56 including a gas engine or a gas turbine, then the cold gas efficiency in the pyrolysis and gasification process 52 may be lowered, a sufficient amount of generated gas 123 may not be produced, and the output from the power recovery process 56 may be reduced. In such a case, the facility operation rate of the power recovery process 56 is lowered to cause an economically undesirable situation. In this case, the facility operation rate of the power recovery process 56 can be prevented from dropping by supplying a fuel 124 such as natural gas, town gas, propane gas, gasoline, kerosine, gas oil, or A heavy oil as an auxiliary fuel or a main fuel to the power recovery process 56 including a gas engine or a gas turbine.

With such an arrangement, since the amount of heat discharged from the power recovery process 56 is increased, the heating medium gas 121 is heated by the heat recovered by the power recovery system exhaust heat recovery process 57 and is used as a heat source in the raw material drying process 51 and the internally circulating fluidized-bed gasification process 59. Consequently, the dried level of the raw material 120 can be maintained even if the raw material 120 is a sludge having a very high water content. The cold gas efficiency in the internally circulating fluidized-bed gasification process 59 can thus be increased, and the amount of energy recovered from the raw material 120 comprising an organic matter having a high water content can be increased. In this case, the amount of fuel 124 supplied to the power recovery process 56 is adjusted (in this case, the thermal energy supplied to the internally circulating fluidized-bed gasification process 59 is neglected) so that the sum of the amount of thermal energy recovered from the generated gas 123 produced in the internally circulating fluidized-bed gasification process 59 and the amount of thermal energy recovered from the exhaust gas from the power recovery process 56 including a gas engine or a gas turbine is equal to or higher than the amount of thermal energy required in the raw material drying process 51, thereby increasing the energy recovery rate of the raw material 120 comprising an organic matter having a high water content and reducing seasonal variations of the energy recovery rate of the raw material 120.

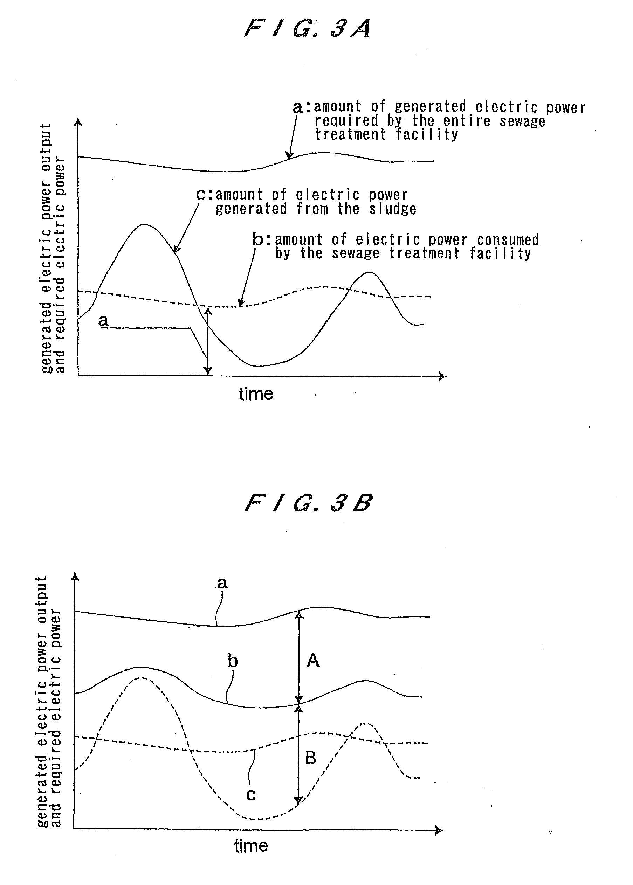

FIGS. 3A and 3B are diagrams showing examples in which sewage sludge is treated by the treating apparatus shown in FIG. 1. FIG. 3A shows an example where the power recovery process 56 is not replenished with a town gas as an auxiliary fuel, and FIG. 3B shows an example where the power recovery process 56 is replenished with a town gas as an auxiliary fuel. In FIGS. 3A and 3B, the solid-line curve a represents an amount of generated electric power required by the entire sewage treatment facility, the broken-line curve b represents an amount of electric power consumed by the sewage treatment facility, and the solid-line curve c represents an amount of electric power generated from the sludge. The vertical axis represents generated electric power output and required electric power, and the horizontal axis represents time.

The sewage sludge has its properties, particularly a water content when it is dehydrated, which vary greatly depending on the seasons. If the power recovery process 56 is not replenished with a town gas, as shown in FIG. 3A, the amount of energy (the amount of generated electric power) recovered from the sludge varies depending on the seasons. If the power recovery process 56 is replenished with a town gas, as shown in FIG. 3B, the amount of energy (the amount of generated electric power) recovered from the sludge increases and its variations are reduced. In FIG. 3B, "A" represents an increase in the amount of generated electric power caused directly by the replenished town gas, and "B" represents an increase in the amount of energy (the amount of generated electric power) recovered from the sludge because the heat recovered in the power recovery system exhaust heat recovery process 57 replenished with a town gas increases to increase the dried level of the sludge, thus increasing the cold gas efficiency.

When the power recovery process 56 including a gas engine or a gas turbine is replenished with a town gas as an auxiliary fuel, the amount of heat discharged from the power recovery process 56 increases, so that a heat source for drying the raw material is ensured. Therefore, the dried level of the raw material 120 rises. Consequently, the cold gas efficiency in the pyrolysis and gasification process 52 increases to increase the amount of a gas that can be recovered from the raw material 120. As a result, the energy of the supplied auxiliary fuel can effectively be utilized in the same manner as a cogeneration system, and the utilization efficiency of the auxiliary fuel is made very high.

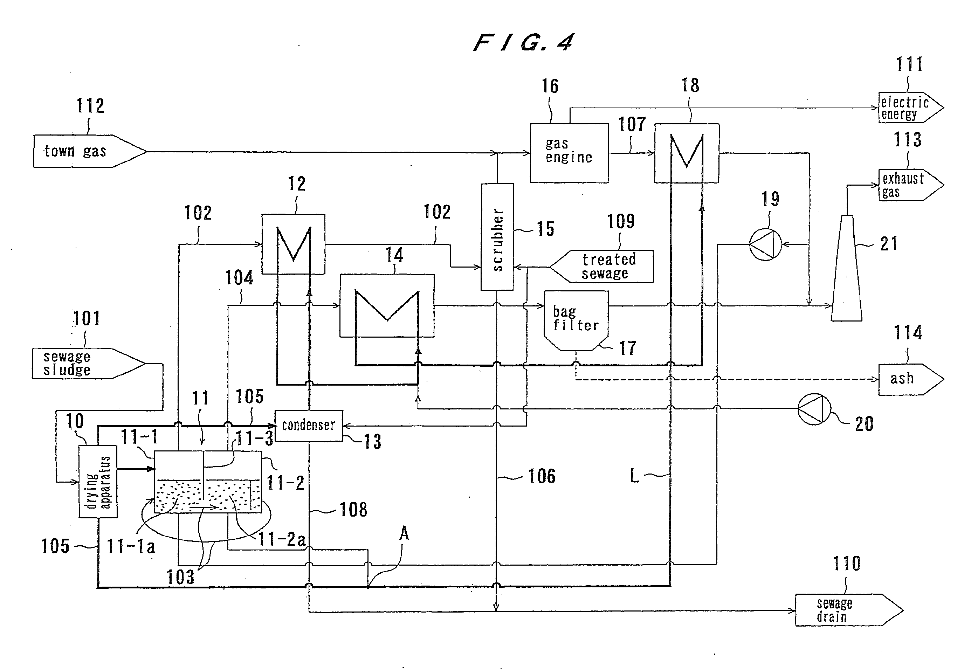

FIG. 4 shows a system arrangement having a treating apparatus for treating an organic matter having a high water content according to the present invention. As shown in FIG. 4, the treating apparatus for treating an organic matter having a high water content comprises a drying apparatus 10, an internally circulating fluidized-bed gasification furnace 11, an air preheater 12, a condenser 13, an air preheater 14, a scrubber 15, and a gas engine 16, etc.

The drying apparatus 10 dries a sewage sludge (having a water content of 70 % or higher) 101 with drying air 105 to lower its water content. The drying air 105 that has contributed to the drying of the sewage sludge is delivered to the condenser 13. The internally circulating fluidized-bed gasification furnace 11 has a gasification chamber 11-1 and a combustion chamber 11-2 in a single furnace. A fluidized bed 11-1a in the gasification chamber 11-1 and a fluidized bed 11-2a in the combustion chamber 11-2 communicate with each other below the lower end of a partition wall 11-3. A bed material 103 in the fluidized bed 11-2a flows into the fluidized bed 11-1a, and circulates between the gasification chamber 11-1 and the combustion chamber 11-2.

The sewage sludge 101 is supplied to the drying apparatus 10 where it is dried by air for drying (drying air) from a drying air circulation passage (described later), and hence the water content of the charged sewage sludge 101 is lowered. The sewage sludge 101 is then charged into the gasification chamber 11-1 in the internally circulating fluidized-bed gasification furnace 11. The charged sewage sludge 101 is pyrolyzed and gasified into a combustible generated gas 102, which is delivered to the air preheater 12. A char (pyrolysis residue such as solid carbon or the like) which is not pyrolyzed and gasified in the gasification chamber 11-1 moves together with the bed material 103 through the passage below the lower end of the partition wall 11-3 into the fluidized bed 11-2a in the combustion chamber 11-2. In the combustion chamber 11 -2, the char is combusted to generate a combustion gas 104. The combustion gas 104 is delivered from the internally circulating fluidized-bed gasification furnace 11 to the air preheater 14. The bed material 103 in the fluidized bed 11-2a which has been heated to a higher temperature by the combustion of the char is returned through another passage to the fluidized bed 11-1a in the gasification chamber 11-1. The heat of the returned bed material 103 is utilized to pyrolyze and gasify the sewage sludge 101.

In the air preheater 12, a heat exchange takes place between the generated gas 102 delivered to the air preheater 12 and the drying air 105. The sensible heat of the generated gas 102 is recovered, and the drying air 105 is heated. The generated gas 102 which has passed through the air preheater 12 is delivered to the scrubber 15. In the scrubber 15, the generated gas 102 is cleaned by the treated sewage 109 that is supplied thereto, and then supplied to the gas engine 16. The treated sewage 109 which has contributed to the cleaning of the generated gas 102 in the scrubber 15 becomes scrubber waste water 106, which is discharged as sewage drain 110. The generated gas 102 supplied to the gas engine 16 is consumed as a gas engine drive fuel, and an electric generator (not shown) is driven by the gas engine 16 to generate electricity 111. The town gas 112 is used when the gas engine 16 starts to operate or when the water content of the sewage sludge 101 is high in summer and the drying heat runs short to cause a reduction in the cold gas efficiency and a reduction in the amount of the combustible gas that can be recovered from the sewage sludge.

An exhaust gas 107 discharged from the gas engine 16 is delivered to the air preheater 18, which carries out a heat exchange between the exhaust gas 107 and the drying air 105. Thereafter, part of the exhaust gas 107 is delivered by a blower 19 to the internally circulating fluidized-bed gasification furnace 11 where the exhaust gas 107 is used as a fluidizing gas of the fluidized-bed 11-1a in the gasification chamber 11-1, and the remainder of the exhaust gas 107 is discharged from a stack 21 to the atmosphere. The combustion gas 104 discharged from the combustion chamber 11-2 of the internally circulating fluidized-bed gasification furnace 11 is delivered to the air preheater 14, which carries out a heat exchange between the combustion gas 104 and the drying air 105 to recover heat from the combustion gas 104. Thereafter, the combustion gas 104 is delivered to the bag filter 17 where ash 114 and the like are removed therefrom. Then, part of the combustion gas 104 is delivered by the blower 19 to the gasification chamber 11-1 of the internally circulating fluidized-bed gasification furnace 11 where the combustion gas 104 is used as a fluidizing gas of the fluidized bed 11-1a in the gasification chamber 11-1, and the remainder of the combustion gas 104 is discharged from the stack 21 to the atmosphere as an exhaust gas 113. Since the exhaust gas 107 from the gas engine 16 and the combustion gas 104 from the combustion chamber 11-2 are gases having a very low oxygen content, the exhaust gas 107 and the combustion gas 104 are suitable as a fluidizing gas in the gasification chamber 11-1 for pyrolyzing and gasifying the supplied sewage sludge without combusting the supplied sewage sludge.

The drying air 105 which has contributed to the drying of the sewage sludge 101 in the drying apparatus 10 and has been delivered to the condenser 13 has a high water content. In the condenser 13, such water content is condensed and removed as condensed water 108, thereby lowering the rate of water in the drying air 105. The drying air 105 with the lowered water rate is delivered to the air preheater 12, which recovers the sensible heat of the generated gas 102 supplied from the gasification chamber 11-1 and heats the drying air 105. The drying air 105 is then delivered to the air preheater 14 which recovers the sensible heat of the combustion gas 104 supplied from the combustion chamber 11-2 and heats the drying air 105. The drying air 105 is then delivered to the air preheater 18 which recovers the sensible heat of the exhaust gas 107 supplied from the gas engine 16 and heats the drying air 105. Then, the heated drying air 105 is delivered to the drying apparatus 10 again.

The drying apparatus 10, the condenser 13, the air preheater 12, the air preheater 14, the air preheater 18, and the drying apparatus 10 jointly make up a closed loop circulation passage (indicated by the thick solid lines), which is used as a drying air circulation passage L with the drying air 105 confined therein. Consequently, the drying air 105 which has contributed to the drying of the sewage sludge 101 and has a malodor is not discharged out. Part of the drying air 105 is extracted from a point A on the drying air circulation passage L (point where the drying air passes after the drying air is heated by the recovered sensible heat of the exhaust gas 107 from the gas engine 16 in the air preheater 18), and supplied to the combustion chamber 11-2 in the internally circulating fluidized-bed gasification furnace 11. In the combustion chamber 11-2, components responsible for the malodor that are contained in the drying air 105 are combusted. Thus, deodorization of malodor components can be performed without providing a specific deodorizing equipment. Therefore, the drying air 105 can be deodorized without the need for any special deodorizing facility. When the drying air 105 in the drying air circulation passage. L runs short, the drying air circulation passage L is replenished with drying air 105 by a blower 20.

Since the drying air 105 discharged from the drying apparatus 10 has a high water content, the condenser 13 for condensing and removing such water content as the condensed water 108 should preferably comprise a water-scrubber condenser which utilizes the treated sewage 109. The water-scrubber condenser has a higher heat transfer efficiency than a shell-and-tube type condenser, and has its heat transfer surface free of contamination. Furthermore, since the drying air 105 should be cooled as much as possible to lower the partial pressure of water vapor, a multistage scrubber which is supplied with cold water at each stage is used as the water-scrubber condenser. With this arrangement, upstream cleaning water which contains a lot of dust particles can be returned to raw sewage in the sewage treatment facility, and downstream cleaning water which comprises only less contaminated condensed water can be returned to the sewage drain 110.

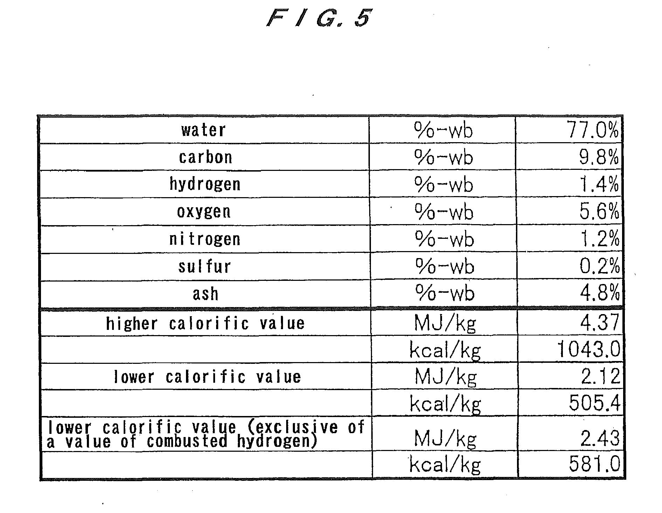

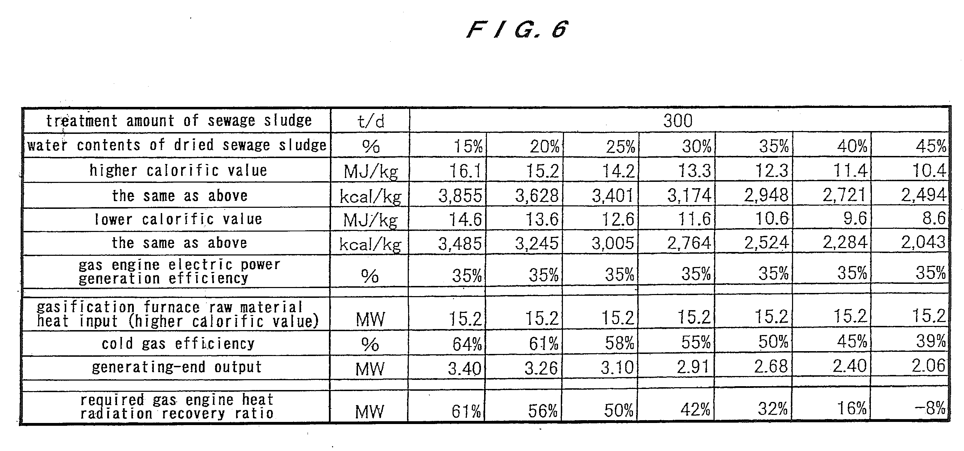

FIGS. 5 and 6 show assumed components of a dehydrated sludge used in the process of treating the sewage sludge in the above treating apparatus, and an example of calculations of the treating process. As shown in FIG. 5, it is assumed that a dehydrated sludge contains 77.0 % of water, 9.8 % of carbon, 1.4 % of hydrogen, 5.6 % of oxygen, 1.2 % of nitrogen, 0.2 % of sulfur, 4.8 % of ash, and has a higher calorific value of 4.37 MJ/kg (1043.0 kcal/kg), a lower calorific value of 2.12 MJ/kg (505.4 kcal/kg), and a lower calorific value (exclusive of a value of combusted hydrogen) of 2.43 MJ/kg (581.0 kcal/kg). Calculated results produced for the treatment of 300 t of sewage sludge per' day are shown in FIG. 6.

If the gas engine 16 has an electric power generation efficiency of 35 %, the gasification furnace raw material heat input (higher calorific value) is 15.2 MW, and the sewage sludge 101 dried by the drying apparatus has water contents of 15 %, 20 %, 30 %, 35 %, 40 %, and 45 %, then the higher calorific value MJ/kg (kcal/kg), the lower calorific value MJ/kg (kcal/kg), the cold gas efficiency %, the generating-end output MW, and the required gas engine heat radiation recovery ratio % are given as shown in FIG. 6.

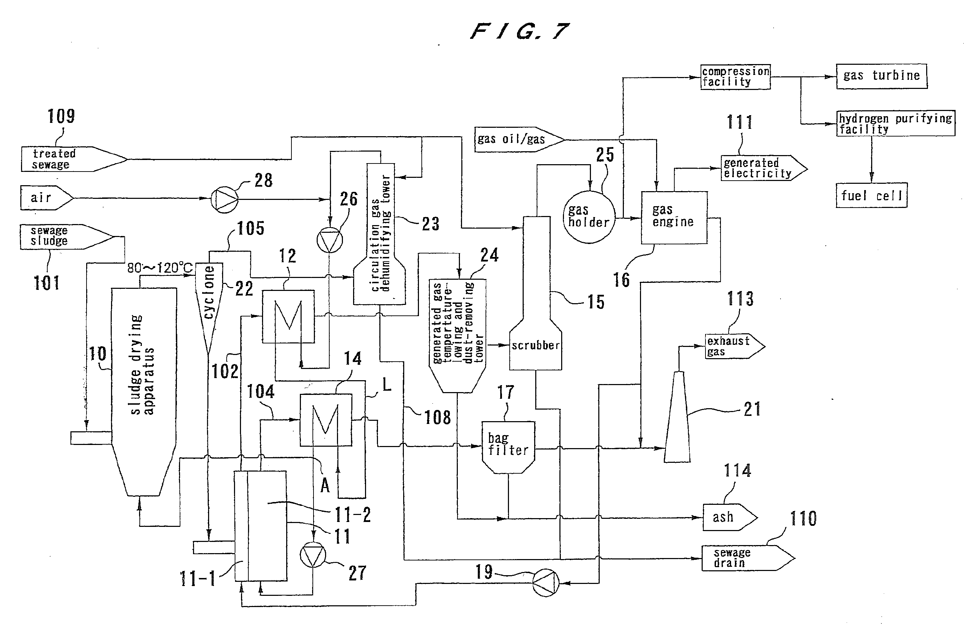

FIG. 7 shows another system arrangement of a treating apparatus for treating an organic matter having a high water content according to the present invention. Those parts shown in FIG. 7 which are denoted by reference characters that are identical to those shown in FIG. 4 are parts identical or corresponding to those shown in FIG. 4. The treating apparatus shown in FIG. 7 differs from the treating apparatus shown in FIG. 4 in that the treating apparatus shown in FIG. 7 additionally includes a cyclone 22, a generated gas temperature-lowering and dust-removing tower 24, and a gas holder 25, and also has a circulation gas dehumidifying tower 23 instead of the condenser 13. A sewage sludge is charged into the drying apparatus 10, and the dried sludge having a temperature ranging from 80 to 120°C is supplied through the cyclone 22 to the gasification chamber 11-1 in the internally circulating fluidized-bed gasification furnace 11. The drying air 105 that has passed through the cyclone 22 is cooled by the treated sewage 109 having a temperature ranging from 10 to 30°C in the circulation gas dehumidifying tower 23, so that the water content of the drying air 105 is condensed away. Sewage drain 110 having a temperature of about 40°C is discharged from the circulation gas dehumidifying tower 23.

The drying air that has passed through the circulation gas dehumidifying tower 23 is delivered by a blower 26 to the air preheater 12. In the air preheater 12, the sensible heat of the generated gas 102 (having a temperature of 600 to 700°C) from the gasification chamber 11-1 of the internally circulating fluidized-bed gasification furnace 11 is recovered to heat the drying air. The heated drying air is then delivered to the air preheater 14 which recovers the sensible heat of the combustion gas 104 (having a temperature of 800 to 900°C) from the combustion chamber 11-2 and heats the drying air to a temperature of 250 to 350°C. The drying air is then supplied to the drying apparatus 10 again. Part of the drying air is extracted from a point A on the drying air circulation passage L, i.e., part of the drying air heated by the air preheater 14 is extracted by a blower 27, and is supplied to the combustion chamber 11-2.

The sensible heat of the generated gas 102 from the gasification chamber 11-1 is recovered by the air preheater 12 and the temperature of the generated gas 102 is lowered to a value ranging from about 350 to 400°C. Then, the temperature of the generated gas' 102 is further lowered to about 50°C to 250°C in the dust-removing tower 24. After the temperature of the generated gas 102 is lowered to a temperature ranging from about 50 to 250°C and dust in the generated gas 102 is removed by the generated gas temperature-lowering and dust-removing tower 24, the generated gas 102 is delivered to the scrubber 15 where the generated gas 102 is cleaned by the treated sewage 109 to lower the temperature of the generated gas 102 to a value ranging from 40 to 45°C, and is then delivered, to the gas holder 25. If the generated gas 102 has a relatively large content of tar, then the temperature of the generated gas 102 is lowered to about 50°C by the generated gas temperature-lowering and dust-removing tower 24. Thereafter, the generated gas 102 is introduced into the scrubber 15, and hence the scrubber 15 is prevented from suffering tar-induced trouble. The generated gas 102 should desirably be treated for' lowering its temperature and removing dust therefrom by a parallel-downflow water scrubber, a jet scrubber, or the like. Part of the exhaust gas (having a temperature of about 150°C) from the gas engine 16 is supplied by the blower 19 to the gasification chamber 11-1 in the internally circulating fluidized-bed gasification furnace 11. When the drying air 105 in the drying air circulation passage L runs short, the drying air circulation passage L is replenished with drying air 105 by a blower 28. The combustion gas 104 whose heat is recovered by the air preheater 14 to lower its temperature to about 150°C flows through a bag filter 17 and is discharged from the stack 21 to the atmosphere.

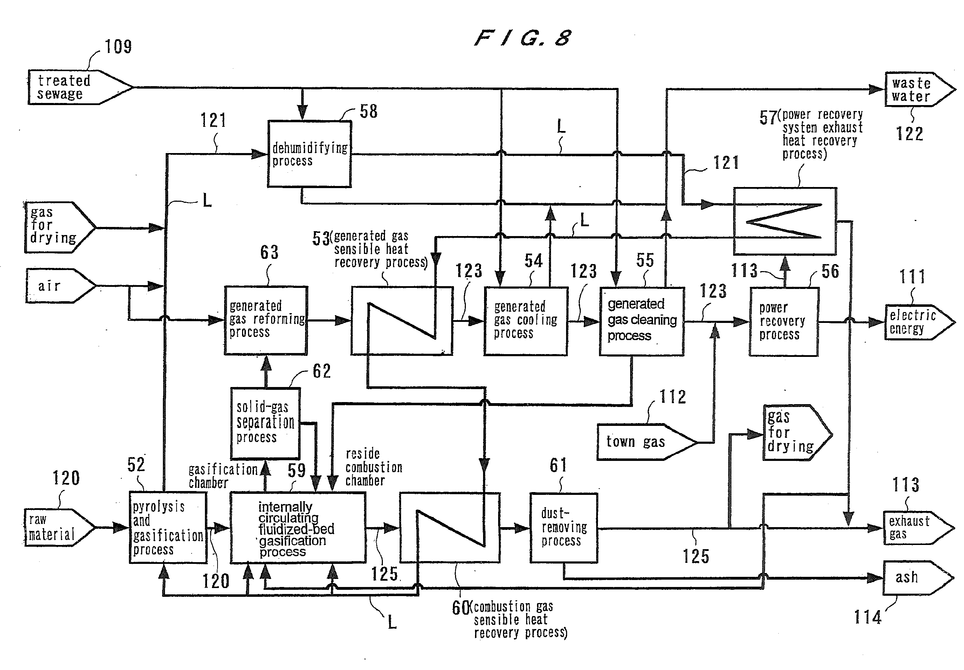

FIG. 8 shows another system arrangement of a treating apparatus for treating an organic matter having a high water content according to the present invention. As shown in FIG. 8, the treating apparatus includes a solid-gas separation process 62 provided downstream of the internally circulating fluidized-bed gasification process 59 shown in FIG. 2, and a generated gas reforming process 63 provided downstream of the solid-gas separation process 62. The flow of the generated gas after the generated gas reforming process 63 is the same as the flow of the generated gas in the treating apparatus shown in FIG. 2.

The solid-gas separation process 62 is carried out by a cyclone separator or a filter separator, and solid components such as char and ash are separated and removed from the generated gas in the solid-gas separation process 62, and are then supplied to a combustion chamber of the internally circulating fluidized-bed gasification process 59. In the solid-gas separation process 62, the critical diameter of the particle which should be separated is 30 µm or less, preferably 20 µm or less, more preferably 15 µm or less. If the cyclone separator is employed, a multi-cyclone type separator in which a plurality of small cyclones are arranged in parallel should be employed.

After the solid-gas separation in the solid-gas separation process 62, the generated gas 123 is introduced into the generated gas reforming process 63 where tar and nitrogen compound are decomposed. The generated gas reforming process 63 should be carried out at a temperature of 1000 °C or lower, preferably 950 °C or lower, more preferably 880°C or lower in order to prevent ash remaining in the generated gas 123 from being melted. A partial oxidation method for combusting part of the generated gas is suitable for maintaining the temperature of the generated gas reforming process 63, and air is used as an oxidizing agent for partial oxidization. Although oxygen can be used as an oxidizing agent, since the generated gas produced in the internally circulating fluidized-bed gasification furnace contains a combustible gas at high concentration, air may be used for partial combustion because a lowering of calorific value is small.

In order to carry out the generated gas reforming process 63 efficiently, it is necessary to reduce the amount of unreacted raw material flowing into the generated gas reforming process 63. Thus, it is effective to increase a residence time of the raw material in the gasification furnace by granulation of the raw material for the purpose of not only enhancing the performance of the solid-gas separation process 62 but also enhancing the conversion ratio of gasification in the internally circulating fluidized-bed gasification process 59. In the case where the raw material is a sewage sludge, the diameter of granulated material should be in the range of 5 mm to 25 mm, preferably 5 mm to 15 mm, more preferably 5 mm to 10 mm.

Further, in order to increase the conversion ratio of gasification in the gasification furnace, it is effective to introduce catalyst into the gasification furnace. The conversion ratio of gasification of the raw material is increased by supplying a relatively inexpensive metal such as iron or calcium which is pulverized as much as possible to the gasification furnace, and hence a load in the generated gas reforming process 63 is lowered. Generally, since energy is required to make a metal particulate, the metal should be supplied in the form of solution such as iron chloride. The iron chloride is used as a coagulant of sewage sludge, and if the raw material is a sewage sludge produced by using iron chloride as a coagulant, then such raw material is suitable for the present invention because a coagulant serves as catalyst.

Catalyst components supplied to the gasification furnace flow into the generated gas reforming process 63 to exert a good influence on gas reforming and gas lightening. Therefore, supply of the catalyst can shorten a residence time of gas in the generated gas reforming process 63 even at the same reforming temperature. If there is no catalyst, the residence time of 4 to 8 seconds are normally required at a reforming temperature of 900°C. However, in the case of sewage sludge coagulated by iron chloride, the same gas reforming effect can be obtained by about half of the residence time or less.

The combustion gas 125 in the internally circulating fluidized-bed gasification process 59 hardly contains water content, and the oxygen concentration is normally kept at 5 % or less, and hence the combustion gas 125 is suitable as the heating medium gas 121 for drying the raw material. Therefore, a replenishing gas of the heating medium gas for drying the raw material may be composed of not air but the combustion gas 125 of the internally circulating fluidized-bed gasification process 59. In this case, since oxygen concentration in the heating medium gas becomes 5 % or less, such heating medium gas cannot be used as a fluidizing gas in the combustion chamber of the internally circulating fluidized-bed gasification process 59. Therefore, in the case where the combustion gas 125 of the internally circulating fluidized-bed gasification process 59 is used as the heating medium gas for drying the raw material, part of the heating medium gas is withdrawn, and the withdrawn heating medium is preferably used as a fluidizing gas of the gasification chamber in the internally circulating fluidized-bed gasification process 59.

Now, returning to the treating apparatus shown in FIG. 7, the heat of the exhaust gas from the gas engine 16 is not recovered. However, the treating apparatus shown in FIG. 7 may have the same air preheater 18 as with the treating apparatus shown in FIG. 4 for recovering heat for drying. In the treating apparatus shown in FIGS. 4 and 7, the drying gas after it is condensed is delivered to the air preheater 12 which performs a heat exchange between the drying gas and the generated gas 102 from the internally circulating fluidized-bed gasification furnace 11. Thereafter, the second air preheater 14 further performs a heat exchange between the drying air and the combustion gas 104. In the treating apparatus shown in FIG. 4, the third air preheater. 18 further performs a heat exchange between the drying air and the exhaust gas supplied from the gas engine 16. These heat exchange processes may be carried out in any sequence.

Gas oil and/or gas is introduced as the auxiliary fuel into the gas engine 16. For the purposes of increasing the facility operation rate and keeping the electric energy output from the gas engine 16 at a required level or higher, the auxiliary fuel is supplied not only when the main process is activated, but also when the water content of the sewage sludge 101 is increased in summer and the drying heat runs short to lower the cold gas efficiency, and the amount of the combustible gas recovered from the sewage sludge is reduced. In this manner, since the amount of exhaust gas from the gas engine 16 is increased, the heat may be used as a drying heat source to keep the dried level of the raw material even if the raw material is a sewage sludge having a very high water content. This also leads to an increase in the cold gas efficiency in the gasification process to increase the amount of energy recovered from the organic matter having a high water content. Gasoline, kerosine, heavy oil, natural gas, propane gas, or the like, other than gas oil or town gas, may be used as the auxiliary fuel depending on the circumstances.

In the above embodiments, the treated sewage is effectively used to dehumidify a heating medium gas (air, nitrogen gas, carbon dioxide gas, or a mixture thereof) as a drying gas or to clean a generated gas. If necessary, water supplied from a water supply facility or industrial water may be used. If the treated sewage is to be used for cooling or cleaning purpose in a scrubber or the like, then it is necessary to pay attention to the growth of biological films in the device. Thus, parts that tend to develop deposits and clogs, such as a grating or a mist separator in the scrubber in particular, need to be made of a material resistant to biological film deposits, such as copper, for example.

Although certain preferred embodiments of the present invention have been shown and described in detail, the present invention is not limited to the above embodiments, but various changes and modifications may be made within the scope of the technical idea described in the scope of claims, the description, and the drawings. For example, although the gas engine 16 is employed in the above embodiments, the gas engine may be replaced with a gas turbine or a fuel cell. The organic matter having a high water content that is treated by the treating apparatus according to the present invention is not limited to a sewage sludge, but may be an organic matter having a high water content such as municipal wastes, biomass or the like.

### Industrial Applicability

The present invention is applicable to a method and apparatus for treating an organic matter such as sewage sludge by gasifying the organic matter into a combustible gas and using the combustible gas as a fuel for a gas engine or a gas turbine to recover power (energy) in the form of electricity or the like.

### FURTHER SUMMARY OF THE INVENTION

1. A method of treating an organic matter, comprising the steps of:
   drying an organic matter as a raw material;
   gasifying the dried raw material to produce a generated gas; and
   recovering sensible heat from the generated gas and/or a combustion gas produced by said gasifying step;
   wherein air, nitrogen gas, carbon dioxide gas, or a mixture of at least two of air, nitrogen gas and carbon dioxide gas is used as a heating medium used in said recovering step, and the heating medium heated in said recovering step is introduced into said drying step for use as a heating medium gas for drying.
2. A method according to 1, wherein in said drying step, a raw material drying apparatus for bringing the heating medium gas into direct contact with the raw material is used, and the heating medium gas whose humidity has been increased by evaporated water is cooled by treated sewage discharged from a sewage treatment facility to condense water content in the heating medium gas and lower the humidity of the heating medium gas, and the heating medium gas whose humidity has been lowered is reused as the heating medium gas for drying.
3. A method according to 1 2, wherein when the heating medium gas for drying is cooled by the treated sewage, the heating medium gas and the treated sewage are brought into direct contact with each other to cool the heating medium gas and wash away a solid material contained in the heating medium gas with the treated sewage.
4. A method according to any one of 1 to 3, wherein the generated gas produced by said gasifying step is introduced into a gas engine or a gas turbine to recover power therefrom.
5. A method according to 4, wherein thermal energy is recovered from an exhaust gas discharged from said gas engine or said gas turbine using the heating medium gas comprising air, nitrogen gas, carbon dioxide gas, or a mixture of at least two of air, nitrogen gas and carbon dioxide gas, and the heating medium gas which has been heated is introduced into said drying step for use as the heating medium gas for drying.
6. A method according to 4 or 5, wherein a fuel comprising natural gas, town gas, propane gas, gasoline, kerosine, gas oil, or a heavy oil is supplied as an auxiliary fuel or a main fuel to said gas engine or said gas turbine.
7. A method according to any one of 4 to 6, wherein the amount .of fuel supplied to said gas engine or said gas turbine is adjusted so that the sum of the amount of thermal energy recovered from the generated gas and/or the combustion gas that is produced in said gasifying step and the amount of thermal energy recovered from an exhaust gas discharged from said gas engine or said gas turbine is equal to or higher than the amount of thermal energy that is required in said drying step.
8. A method of treating an organic matter, comprising the steps of:
   supplying an organic matter to a gasification chamber;
   gasifying the organic matter to produce a combustible gas and residue in said gasification chamber;
   combusting the residue produced in said gasification chamber in a combustion chamber to produce a combustion gas; and
   introducing the combustible gas produced in said gasification chamber into a gas engine or a gas turbine to recover power;
   wherein said gasification chamber and said combustion chamber are provided in an internally circulating fluidized-bed gasification furnace, and a bed material is circulated between said gasification chamber and said combustion chamber.
9. A method according to 8, wherein a heat exchange between the combustible gas produced in said gasification chamber, the combustion gas produced in said combustion chamber and an exhaust gas from said gas engine or said gas turbine., and air is carried out to recover sensible heat from these gases, and the air heated by the heat recovery is used as drying air for drying the organic matter.
10. A method according to 9, wherein the drying air used for drying the organic matter is heated by a heat exchange between the drying air, and the combustible gas, the combustion gas and the exhaust gas, and is circulated again for use as the drying air, and part of the drying air which is circulated is introduced into said internally circulating fluidized-bed gasification furnace and is deodorized therein.
11. A method according to 10, wherein a water content in the drying air used for drying the organic matter is condensed away to lower the rate of the water content in the drying air.
12. A method according to 11, wherein the water content in the drying air is condensed away by a direct heat exchange between the drying air and cooling water.
13. A method according to 11 or 12, wherein a sewage drain is used as cooling water to condense away the water content in the drying air.
14. A method according to any one of 8 to 13, wherein a scrubber is provided for cleaning the combustible gas supplied from said gasification chamber, and a temperature-lowering and dust-removing apparatus is provided upstream of said scrubber, whereby the combustible gas is treated by said temperature-lowering and dust-removing apparatus to lower a temperature of the combustible gas to a value ranging from 150°C to 250°C for condensing tar in the combustible gas and to remove dust from the combustible gas, and then the combustible gas is charged into said scrubber.
15. A method according to any one of 8 to 14, wherein a fuel comprising natural gas, town gas, propane gas, gasoline, kerosine, gas oil, or a heavy oil is supplied as an auxiliary fuel or a main fuel to said gas engine or said gas turbine.
16. A method according to any one of 8 to 15, wherein the amount of fuel supplied to said gas engine or said gas turbine is adjusted so that the sum of the amount of thermal energy recovered from the combustible gas and/or the combustion gas that is produced from said internally circulating fluidized-bed gasification furnace and the amount of thermal energy recovered from an exhaust gas discharged from said gas engine or said gas turbine is equal to or higher than the amount of thermal energy that is required to dry the organic matter.
17. An apparatus for treating an organic matter, comprising:
   a gasification chamber configured to gasify an organic matter to produce a combustible gas and residue;
   a combustion chamber configured to combust the residue produced in said gasification chamber to produce a combustion gas; and
   a supply device configured to supply the combustible gas produced in said gasification chamber into a gas engine or a gas turbine to recover power;
   wherein said gasification chamber and said combustion chamber are provided in an internally circulating fluidized-bed gasification furnace, and a bed material is circulated between said gasification chamber and said combustion chamber.
18. An apparatus according to 17, further comprising:
   a drying apparatus for drying the organic matter; and
   an air preheater for performing a heat exchange between the combustible gas produced in said gasification chamber, the combustion gas generated in said combustion chamber and an exhaust gas from said gas engine or said gas turbine, and air to recover sensible heat from the gases;
   wherein the air heated by heat recovery in said air preheater is introduced as drying air into said drying apparatus.
19. An apparatus according to 18, further comprising a drying air circulation passage for leading the drying air discharged from said drying apparatus and heated by said air preheater to said drying apparatus again;
   wherein part of the drying air which circulates through said drying air circulation passage is introduced as a gas for combustion into said combustion chamber and is deodorized therein.
20. An apparatus according to 19, further comprising a condenser for condensing away a water content in the drying air to lower the rate of the water content in the drying air;
   wherein the drying air discharged from said drying apparatus is introduced into said condenser.
21. An apparatus according to any one of 17 to 20, wherein a fuel comprising natural gas, town gas, propane gas, gasoline, kerosine, gas oil, or A heavy oil is supplied as an auxiliary fuel or a main fuel to said gas engine or said gas turbine.
22. An apparatus according to any one of 17 to 21, wherein the amount of fuel supplied to said gas engine or said gas turbine is adjusted so that the sum of the amount of thermal energy recovered from the combustible gas and/or the combustion gas that is produced from said internally circulating fluidized-bed gasification furnace and the amount of thermal energy recovered from an exhaust gas discharged from said gas engine or said gas turbine is equal to or higher than the amount of thermal energy that is required to dry the organic matter.

## Claims

1. A method of treating an organic matter, comprising the steps of:
supplying an organic matter to a gasification chamber;
gasifying the organic matter to produce a combustible gas and residue in said gasification chamber;
combusting the residue produced in said gasification chamber in a combustion chamber to produce a combustion gas; and
introducing the combustible gas produced in said gasification chamber into a gas engine or a gas turbine to recover power;
wherein said gasification chamber and said combustion chamber are provided in an internally circulating fluidized-bed gasification furnace, and a bed material is circulated between said gasification chamber and said combustion chamber.

2. A method according to claim 1, wherein a heat exchange between the combustible gas produced in said gasification chamber, the combustion gas produced in said combustion chamber and an exhaust gas from said gas engine or said gas turbine and air is carried out to recover sensible heat from these gases, and the air heated by the heat recovery is used as drying air for drying the organic matter.

3. A method according to claim 2, wherein the drying air used for drying the organic matter is heated by a heat exchange between the drying air, and the combustible gas, the combustion gas and the exhaust gas, and is circulated again for use as the drying air, and part of the drying air which is circulated is introduced into said internally circulating fluidized-bed gasification furnace and is deodorized therein.

4. A method according to claim 3, wherein a water content in the drying air used for drying the organic matter is condensed away to lower the rate of the water content in the drying air.

5. A method according to claim 4, wherein the water content in the drying air is condensed away by a direct heat exchange between the drying air and cooling water.

6. A method according to claim 4 or 5, wherein a sewage drain is used as cooling water to condense away the water content in the drying air.

7. A method according to anyone of claim 1 to 6, wherein a scrubber is provided for cleaning the combustible gas supplied from said gasification chamber, and a temperature-lowering and dust-removing apparatus is provided upstream of said scrubber, whereby the combustible gas is treated by said temperature-lowering and dust-removing apparatus to lower a temperature of the combustible gas to a value ranging from 150°C to 250°C for condensing tar in the combustible gas and to remove dust from the combustible gas, and then the combustible gas is charged into said scrubber.

8. A method according to anyone of claims 1 to 7, wherein a fuel comprising natural gas, town gas, propane gas, gasoline, kerosine, gas oil, or a heavy oil is supplied as an auxiliary fuel or a main fuel to said gas engine or said gas turbine.

9. A method according to anyone of claims 1 to 8, wherein the amount of fuel supplied to said gas engine or said gas turbine is adjusted so that the sum of the amount of thermal energy recovered from the combustible gas and/or the combustion gas that is produced from said internally circulating fluidized-bed gasification furnace and the amount of thermal energy recovered from an exhaust gas discharged from said gas engine or said gas turbine is equal to or higher than the amount of thermal energy that is required to dry the organic matter.

10. An apparatus for treating an organic matter, comprising:
a gasification chamber configured to gasify an organic matter to produce a combustible gas and residue;
a combustion chamber configured to combust the residue produced in said gasification chamber to produce a combustion gas; and
a supply device configured to supply the combustible gas produced in said gasification chamber into a gas engine or a gas turbine to recover power;
wherein said gasification chamber and said combustion chamber are provided in an internally circulating fluidized-bed gasification furnace, and a bed material is circulated between said gasification chamber and said combustion chamber.

11. An apparatus according to claim 10, further comprising:
a drying apparatus for drying the organic matter; and
an air preheater for performing a heat exchange between the combustible gas produced in said gasification chamber, the combustion gas generated in said combustion chamber and an exhaust gas from said gas engine or said gas turbine, and air to recover sensible heat from the gases;
wherein the air heated by heat recovery in said air preheater is introduced as drying air into said drying apparatus.

12. An apparatus according to claim 11, further comprising a drying air circulation passage for leading the drying air discharged from said drying apparatus and heated by said air preheater to said drying apparatus again;
wherein part of the drying air which circulates through said drying air circulation passage is introduced as a gas for combustion into said combustion chamber and is deodorized therein.

13. An apparatus according to claim 12, further comprising a condenser for condensing away a water content in the drying air to lower the rate of the water content in the drying air;
wherein the drying air discharged from said drying apparatus is introduced into said condenser.

14. An apparatus according to anyone of claims 11 to 13, wherein a fuel comprising natural gas, town gas, propane gas, gasoline, kerosine, gas oil, or A heavy oil is supplied as an auxiliary fuel or a main fuel to said gas engine or said gas turbine.

15. An apparatus according to anyone of claims 11 to 14, wherein the amount of fuel supplied to said gas engine or said gas turbine is adjusted so that the sum of the amount of thermal energy recovered from the combustible gas and/or the combustion gas that is produced from said internally circulating fluidized-bed gasification furnace and the amount of thermal energy recovered from an exhaust gas discharged from said gas engine or said gas turbine is equal to or higher than the amount of thermal energy that is required to dry the organic matter.
